(19) Europäisches Patentamt
European Patent Office
Office européen des brevets

(11) Publication number: **0 055 235**
**B1**

(12) **EUROPEAN PATENT SPECIFICATION**

(45) Date of publication of patent specification: **06.05.87**

(51) Int. Cl.⁴: **C 08 L 5/12,** G 01 N 30/48

(21) Application number: **81850244.5**

(22) Date of filing: **15.12.81**

# (54) Gel product for separation.

(30) Priority: **18.12.80 SE 8008950**

(43) Date of publication of application:
**30.06.82 Bulletin 82/26**

(45) Publication of the grant of the patent:
**06.05.87 Bulletin 87/19**

(84) Designated Contracting States:
**DE FR GB**

(56) References cited:
**GB-A-1 266 255**
**GB-A-1 574 414**
**US-A-3 873 514**
**US-A-3 959 251**

(73) Proprietor: **GELINNOVATION H.B.**
**Bodalsvägen 4 A**
**S-18136 Lidingö (SE)**

(72) Inventor: **Porath, Jerker**
**Storskogsvägen 28**
**S-752 45 Uppsala (SE)**

(74) Representative: **Rosenquist, Holger et al**
**H Albihns Patentbyra AB Box 7664**
**S-103 94 Stockholm (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 055 235 B1

**Description**

Adsorbents based on polysaccharide gels are used, universally as preparative aids for concentration, purification and isolation of naturally occurring substances, especially proteins and nucleic acids, but also for synthesis of organic products. The adsorbents are characterized by the substitution of the polysaccharide with adsorption-conducive groups. For example, a neutral polysaccharide gel can be carboxymethylized in alkali to produce a cation exchanger. If the gel is substituted with an amino group, for example diethylamino ethyl, a cation exchanger is obtained which is suited to protein separation. It is also possible to introduce into the (neutral) gel metal chelate-forming groups, for example iminodiacidic acid groups

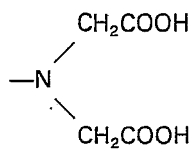

thus producing gels with strong affinity for divalent or trivalent metal ions. It is also possible to introduce larger molecules such as proteins. The protein gels thus substituted can be used for affinity chromatography or, if the protein is an enzyme, its catalytic properties can be used. Adsorbents for biospecific affinity chromatography can also be obtained by introducing amino acids, peptides, carbohydrates, nucleotides, oligonucleotides and polynucleotides, nucleic acid etc. Many of these gel products have widespread use in medical diagnosis.

The polysaccharide gels are hydrophilic, a property which is of great value in work with biologically active substances which are soluble in water. Galactan gels, including agar and agarose, produce strong gels which are more permeable than the gels obtained by cross-linking of for example detran and starch. Polysaccharide gels now available are soft in comparison with many inorganic gels such as silica gel and are also softer than styrene-based gels, for example. This limits the applications of the gels and makes them less suited to or unusable for high-pressure chromatography and for technical use. The fluid flow is too low at high pressure and at low pressure even in deep and wide gel particle beds because of particle deformation.

The present invention relates to a gel product essentially for separation purposes, molecule and particle immobilisation with mechanical properties superior to polysaccharide gel adsorbents available up to now. Characteristic of the invention is that the gel consists of particles of spherical form containing a gel-forming galactan, substituted with adsorption-conducing groups, said gel being cross-linked with glyceryl diether groups

$$—OCH_2—CHOH—CH_2—O—,$$

or groups of the structure

$$—O—CH_2CH_2—SO_2—CH_2—CH_2—O—,$$

and in the water-swollen state containing at least 12% by weight dry substance, at least 10% being the galactan, and that the gel contains cavities formed by dissolution of selectively degradable macromolecules or particles, or regions which can enclose or be penetrated by proteins, macromolecules, viri or subcellular particles. The gel product is cured by shrinking and subsequent cross-linking of the polysaccharide chains with the gel in the shrunken state, so that the rigidity of the particles is significantly improved.

The gel product according to the invention is prepared so that particles containing galactan and water in gel form or as drops suspended in a liquid phase immiscible with water and impregnated with macromolecules or microparticles of smaller dimensions than the gel particles or drops of liquid, and which are degradable in alkaline environment are formed whereafter the water is completely or partially replaced with methanol or ethanol, which is then evaporated at reduced pressure so that the volume of the gel is reduced to half or less, whereafter the gel is cross-linked with glyceryl diether groups

$$—OCH_2—CHOH—CH_2—O—,$$

or groups of the structure

$$—O—CH_2CH_2—SO_2—CH_2—CH_2—O—,$$

in the shrunken state in solvent which increases the volume of the shrunken gel by at most 50%, whereafter the impregnating macromolecules or microparticles are degraded in alkaline medium, adsorption-conducing groups being introduced into the shrunken gel prior to or after dissolution of the impregnating macromolecules or microparticles or in that the water in the particles containing galactan and water in gel form or as drops suspended in a liquid phase immiscible with water, is completely or partially replaced with methanol or ethanol, which is then evaporated at reduced pressure so that the volume of the gel is reduced to half or less, whereafter the gel is cross-linked in solvent which increases the volume of the shrunken gel by at most 50%, the adsorption-conducing groups being introduced into the shrunken gel prior to or after the cross-linking. It is possible, for example, by increasing the percentage of agarose from 6% to 10% to increase the flow rate in a 1 meter deep bed by a factor of more than three. At higher agarose concentrations, the gel strength increases so that high pressure can be applied and relatively high flows can thereby also be obtained in preparative chromatography beds. The flow properties in a gel bed, in which the agar

concentration exceeds 14% are exceptionally good when the particle diameter exceeds 10 µm.

The manufacture of galactan gels with high polysaccharide concentration presents a problem. This applies to both carragenans and agar and agarose. It is extremely difficult to obtain an 8% agar gel by dissolving the agar under heat and pressure. The invention relates to a shrunken gel of a matrix concentration exceeding that of the spontaneously formed gel. The shrunken gel contains at least 10% galactan, to which there have been bonded covalently or otherwise substances which produce the desired adsorption characteristics of the gel. Especially good properties are to be found in a gel which in the shrunken state consists of particles of spherical or nearly spherical form.

The rigidity of an agar gel is explained by the fact that the polysaccharide chains form bundles of more or less parallel strands held together by hydrogen bonds. In this manner, the gel is "braced" and a gel strength is obtained which is significantly greater than that in a gel made of randomly placed polysaccharide chains. The original structure appears to be partially preserved in a gel according to the invention, which should explain the relatively high permeation through the gel phase. The galactan-based gels are constructed according to the same pattern as the agar and agarose gels, and therefore they are also encompassed by the invention. It is characteristic of the shrinking, which produces the products according to the invention that the original form of the gel particles is essentially preserved. Thus, if one starts with spherical gel particles, spherical particles are obtained after shrinkage. No cracking of the particles as a result of the contraction has been observed.

As a measure of permeability, one can state how an uncharged test substance or, more generally, a substance without affinity to the gel of given molecular dimensions is distributed between the gel phase and the surrounding liquid phase. A suitable measure is the distribution coefficient, i.e. the quotient between the concentrations in the gel and the surrounding solution. Gels which are permeable to molecules having a weight exceeding 10,000 dalton, i.e. gels which can be penetrated by proteins and other biopolymers, are technically important. A protein is less suitable for a permeability test, since it may be adsorbed on the surface or in a thin layer close to the face boundary between the gel and the solution, thus giving misleadingly high values. The ideal test substance should therefore not have any affinity to the gel matrix. Polyglucose, e.g. a hydrolyzed dextran fraction of a molecular weight lying in the interval 10—20 kilodalton, comes sufficiently close to the ideal. Products according to the invention are penetrated by such a test substance so that the concentration quotient (distribution coefficient) exceeds 1/10. If the test substance has affinity for the adsorption conducive groups, "the ligands", which are linked to the gel, the distribution coefficient assumes higher values so that the concentration of the test substance greatly exceeds the concentration in the surrounding solution. This situation also characterizes the invention.

Shrinkage of the gel reduces the permeability and can, if the gel contraction is quite marked, result in particles impermeable to proteins and other substances of similar molecular dimensions. A characteristic variant of the invention consists of a gel with liquid-filled cavities of significantly smaller dimensions than the gel particles themselves. The diameter of the cavity should be less than 1/10 of the gel particle diameter. A "cavity gel" thus consists of a contracted gel network with liquid-filled regions into which macromolecules and, if the cavities are sufficiently large, also small particles can penetrate.

A cavity gel according to the invention is obtained by one of the following methods:

A. A high-molecular substance, e.g. a protein, is allowed to penetrate into a particular galactan gel such as agar gel or agarose gel with suitable polysaccharide concentration, e.g. in the interval 2—8%. The solution, which surrounds the immersed particles, is removed by for example suction on a filter. The particles are washed and silted up in an organic solvent. It is advisable to select a solvent which can take up water. Methanol and ethanol especially have proved to be good. The agar gel balls retain their shape and shrink only insignificantly. Effective shrinking is obtained by the organic solvent together with remaining water being completely vaporized at sharply reduced pressure. In order to assure an effective shrinkage, treatment with a solvent and subsequent evacuation is repeated. The shrunken gel swells completely or partially to original size when brought in contact with water. To prevent swelling, the gel is cross-linked in the shrunken state. This can be done in a solution of an organic solvent with 0—25% water. The cross-linking should be done so that the bridges do not contain charged groups. Suitable bridge structures are

$$—O—CH_2—CHOH—CH_2—O$$

and

$$—O—CH_2—CH_2—SO_2—CH_2—CH_2—O—$$

which are obtained when the galactan is cross-linked with bifunctional bisepoxides or epichlorohydrin or divinyl sulphone. Cross-linking in alkaline environment with epichlorohydrin, bisepoxides or divinyl sulphone in methanol or ethanol produces a product which can be transformed into a cavity gel according to the invention by alkaline treatment—a longer period at room temperature; a shorter period under heating—and subsequent washing out of the hydrolysis products of the protein or another alkali-unstable polymer if one has been used for the impregnation. The cross-linking stabilizes the gel so that it produces a product according to the invention with high gel strength but with greater permeability than a cross-linked gel formed in the absence

of the penetrating high-molecular substance. The latter should not react with the cross linker. When protein is used for preparing the cavity gel, reactive groups can be blocked by, for example, alkylizing prior to cross-linking. This prevents portions of the protein molecule from being built into the gel matrix.

B. Galactan, e.g. agar or agarose, is dissolved in a warm—preferably close to 100°C—aqueous suspension of microparticles with a diameter which should be less than 10 µm, preferably less than 1 µm, and which can be dissolved in alkali or in another manner which leaves the galactan structure essentially intact, for example small silica gel particles, membrane fragments, viri or bacteria. The microparticle-galactan suspension is dispersed in organic solvent with limited mixability in water, e.g. toluene or ethylene dichloride under heavy agitation. Surfactants for emulsion stabilization can be added with advantage. During cooling, the drops form spherical gel particles containing inclusions of the smaller particles, which can be selectively divided under conditions where the galactan is essentially intact. The included microparticles are now dissolved with the alkali treatment or, in those cases where they consist of silica gel, diluted hydrofluoric acid can be used after shrinking and cross-linking.

To a certain extent, cavity gels can be "tailor-made" for various permeability requirements. It is of course important to adapt the concentration of protein, or alkali-soluble microparticles so that the desired permeability is achieved while retaining satisfactory particle rigidity.

A further characteristic of the invention is that to the shrunken galactan skeleton of the gel, groups are linked which impart the adsorbent character to the gel particles. The adsorption-conducive groups can be covalently bonded to the polysaccharide. The nature of the groups or substituents (the ligands) can be selected so that the gel is imparted the characteristic adsorption properties according to the invention (see page 1). The substituents can be introduced into the galactan at different stages of the preparation of the gel product. Thus agar in soluble form can be substituted, whereafter the gel is formed. This is however not an especially good method, since the gel formation is made more difficult, especially at higher degrees of substitution. It is therefore more suitable to introduce the groups when the galactan has gelled. This can be done either prior to or after shrinkage. Prior to shrinkage, the galactan is sterically more accessible to substitution than after. A cross-linked gel can be substituted by more drastic methods, e.g. higher temperature with less or no risk of dissolving the gel. An adsorbent can also be prepared according to the "sandwich principle". In this case there are adsorbed a protein, nucleic acid, cell membrane, virus etc. to a gel according to the invention, adding new adsorption properties which reflect the affinity ratios of the adsorbed substances. A protein with two separate adsorption centers—one for a group in the gel and one for a carbohydrate, for example—forms after adsorption to the gel an adsorbent for the carbohydrate.

With the present invention it is also possible to make hard gel particles with very large cavities for adsorption of for example cell fragments, mitochondria etc. Prior to shrinking, large particles with a diameter of preferably 1—10% of the diameter of the gel particles are incapsuled, whereby the remaining gel skeleton after shrinking and dissolution of the enclosed particles will contain a high percentage of dry substance, while the water-filled cavities, despite this, leave space for adsorption of large particles. Similar results have only been able to be achieved previously with gel beads with a dry substance content of about 1—2%, but the separations have proceeded quite slowly. Due to the fact that the shrinkage takes place over such large particles, one can regard the cavities occurring as enclosing a separate phase.

Example 1

200 g of agarose beads swollen in water and containing 6% polysaccharide were transferred to a Büchner funnel. A 10% albumin solution in water was allowed to run slowly into the bed. When the entire bed had been thoroughly wetted by the albumin solution, the solution was suctioned off between the gel grains at slightly reduced pressure. The gel thus prepared with albumin was transferred to a 2 liter round bottom flask. 500 ml of methanol was added, and the flask was coupled to an evaporation apparatus and kept at reduced pressure. The flask was heated and rotated slowly until no more of the solution evaporated. A mixture of 40 ml 0.1 M NaOH+10 ml 2 M NaOH was added in portions while stirring with a glass stirrer. 500 ml of methanol was added during heavy shaking and stirring, so that the gel grains were suspended effectively. The solution was again evaporated at 40°C under reduced pressure into a dry powder. An additional 200 ml of methanol was added as well as 10 ml of ethyl bromide to block groups which would react with the cross-linking agent in the subsequent operation, and the solution was evaporated. The shrunken gel weighed 128 g.

6 g of the dried gel was mixed with 75 ml of solution of 90% by volume ethanol and 10% by volume of 1 M NaOH and 10 ml epichlorohydrin. The suspension was heated to 60°C and was allowed to stand at this temperature for 12 hours under light stirring. The gel was transferred to a Büchner funnel and was first washed with water and then with 1 M NaOH. The gel was transferred into a flask with a reflex condensor. 200 ml 1 M NaOH and 1 g sodium boron hydride were added and the content was heated to 50°C and was allowed to stand at this temperature for one day. The gel was transferred to a Büchner funnel and was washed with water until the washing liquid did not display any absorption at 280 nm. Due to the methanol treatment and the subsequent operations, the gel had shrunk to about one-third of its original volume.

2. g of this gel were transferred into 10 ml of 0.1 M NaOH and were treated with 2 ml of divinyl sulphone for 30 minutes at 25°C. The gel was washed with 0.1 m sodium carbonate and was transferred to a 100 ml round bottom flask, and 10 ml of 0.1 M sodium bicarbonate was added, the pH was adjusted to 11 and 1 ml of tetra ethylene pentamine was added. The gel suspension was stirred at room temperature for 2 hours, the gel was transferred onto a filter and was washed with water. Its capacity for adsorbing copper ions, nucleotides (adenosin triphosphate and cytidin monophosphate) was tested at pH 5 and 7 in acetate and phosphate buffer, respectively. The activation and coupling with amine did not change the gel volume much (less than 10% estimated volume increase) and the dry substance content for the swollen gel was about 13%. In other similar tests with more intensive dewatering, gels with over 25% dry substance have been obtained. Usually we stopped at 14 or 15%, however.

Example 2

200 g of strongly suctioned-off gel of 6% cross-linked agarose, to which cystine had been coupled and carboxymethylized, was dried at reduced pressure three times with 50% methanol and then three times with pure methanol, thus producing 13.8 g of dry gel. The dry cystine agar powder swelled in 150 ml of 90% ethyl alcohol overnight. The solvent was decanted off. A mixture of 20 g KOH, 65 ml 90% ethanol and 0.2 ml epichlorohydrin was added in portions while stirring. After 2 hours, the pH had dropped to about 10. 200 g KOH dissolved in 15 ml of water was added as well as 10 ml of epichlorohydrin, and the gel suspension was allowed to stand for 2 days under slow stirring. The gel was washed with water. A small amount (17 ml) was reduced in 0.1 M tris-HCl, pH 8.1, was reduced with 5 ml of mercaptoethanol for 3 hours. The product was washed with water until the filtrate did not produce any precipitate with $HgCl_2$. A bed (1×10 cm) was packed and saturated with $HgCl_2$. About 220 µmols of mercury ions were absorbed per ml of gel. 20—30 µmols of $Hg^{2+}$ were washed out with 0.1 Methyl morpholin acetate, pH 7. More than 100 mg of protein from a vegetable extract were adsorbed to the mercury-containing gel. The adsorption trial exemplifies the "sandwich method". The cystine gel is an adsorbent for mercury ions and the cystine agarose gel charged with mercury ions is in turn an adsorbent for protein. The test shows also that protein can effectively penetrate into the gel. A trial with the above packed gel, in which 0.5 ml of dextran hydrolysate of molecular weight 20,000 was chromatographed in beds, showed that the maximum for dextran distribution (demonstrated with orcinol after hydrolysis with sulphuric acid) was displaced backwards in relation to the void volume by about 25%, thus exceeding the distribution coefficient value 0.1.

The yield of gel amounted to 52 g of strongly suctioned-off water-swollen gel, from which it follows that the concentration of agar in the gel increased by about a factor of 4, i.e. was at least 20% and at most 25%.

Example 3

225 ml of 6% furcellaran ("Danish agar") was washed in methanol and transferred to the rotation evaporator together with 500 ml of methanol. The methanol was evaporated under reduced pressure. The procedure was repeated three times. 11 g of dried gel was obtained. The gel was swollen in 75% ethanol for one hour and was freed of free liquid by suction. The gel was cross-linked with epichlorohydrin as described in Example 1. After washing, the gel was transferred to 175 ml of 4 M NaOH, 1 g $NaBH_4$ was added and then 33 ml of epichlorohydrin in portions under slow heating to 40°C. After 2 hours the gel was washed. 15 g of histidin, dissolved in 2.90 ml of 0.5 M $Na_2CO_3$ was adjusted to pH 11.3 and added to the gel. The suspension was agitated at 60°C for one hour. The gel was placed on a filter, was suctioned off and washed with water. The gel contained 4.5% nitrogen and was strongly blue-colored by the copper ions. The copper gel adsorbed in turn peptides and proteins in phosphate buffer and tris buffer at pH 7. The capacity for serum albumin exceeded 50 mg per ml gel.

The gel yield was 66 g, i.e. the gel held at least 15% by volume of agar.

**Claims**

1. Gel product essentially for separation purposes, molecule and particle immobilisation, characterized in that it consists of particles of spherical form containing a gel-forming galactan, substituted with adsorption-conducing groups, said gel being cross-linked with glyceryl diether groups

$$—OCH_2—CHOH—CH_2—O—,$$

or groups of the structure

$$—O—CH_2CH_2—SO_2—CH_2—CH_2—O—,$$

and in the water-swollen state containing at least 12% by weight dry substance, at least 10% being the galactan, and that the gel contains cavities formed by dissolution of selectively degradable macromolecules or particles, or regions which can enclose or be penetrated by proteins, macromolecules, viri or subcellular particles.

2. Gel product according to Claim 1, characterized in that it has so high permeability that an uncharged water-soluble polymer with a molecular weight in the range 10—20 kilodalton, is distributed between the gel and the surrounding solution so that the concentration per unit of volume in the gel exceeds one-tenth of the concentration in the rest of the solution.

3. Gel product according to Claim 1 or 2, characterized in that the adsorption-conducing

groups are ions or ionogenic in aqueous solution, of the type forming chelates with divalent and trivalent metal ions.

4. Gel product according to any one of the preceding claims, characterized in that the adsorption-conducing groups are ligands covalently bonded to the gel matrix for affinity chromatography.

5. Gel product according to Claim 4, characterized in that the covalently bound ligands are amino acids, peptides, proteins, nucleotides, oligonucleotides, nucleic acids, or biological particles such as cells, cell fragments or viri, and/or hydrophobic groups such as alkyl and aryl for hydrophobic adsorption chromatography.

6. Method of preparing a gel product according to claims 1—5, characterized in that particles containing galactan and water in gel form or as drops suspended in a liquid phase immiscible with water and impregnated with macromolecules or microparticles of smaller dimensions than the gel particles or drops of liquid and which are degradable in alkaline environment are formed, whereafter the water is completely or partially replaced with methanol or ethanol, which is then evaporated, at reduced pressure so that the volume of the gel is reduced to half or less, whereafter the gel is cross-linked with glyceryl diether groups

$$—OCH_2—CHOH—CH_2—O—$$

or groups of the structure

$$—O—CH_2CH_2—SO_2—CH_2—CH_2—O—$$

in the shrunken state in solvent which increases the volume of the shrunken gel by at most 50%, whereafter the impregnating macromolecules or microparticles are degraded in alkaline medium, adsorption-conducing groups being introduced into the shrunken gel prior to or after dissolution of the impregnating macro-molecules or microparticles, or in that the water in the particles containing galactan and water in gel form or as drops suspended in a liquid phase immiscible with water, is completely or partially replaced with methanol or ethanol, which is then evaporated, at reduced pressure so that the volume of the gel is reduced to half or less, whereafter the gel is cross-linked in solvent which increases the volume of the shrunken gel by at most 50%, the adsorption-conducing groups being introduced into the shrunken gel prior to or after the cross-linking.

7. Method according to Claim 6, characterized in that the adsorption-conducing groups are included in the original gel.

8. Method according to Claims 6—7, characterized in that microparticles containing silicic acid are introduced into the unshrunken gel.

9. Method according to Claim 6 or 7, characterized in that the impregnation is done by diffusion of macromolecules or particles in the gel, in the form of galactan-containing liquid drops which are then transferred in gel particles.

10. Method according to Claims 6—9, characterized in that the molecules degradable in alkali consist of protein or protein aggregates.

**Patentansprüche**

1. Gelprodukt, das im wesentlichen zu Trennzwecken sowie zur Molekül und Teilchenimmobilisierung dient, dadurch gekennzeichnet, daß es aus Teilchen kugeliger Form mit einem gelbildenden Galactan, das mit zur Adsorption beitragenden Gruppen substituiert ist, besteht, daß das Gel mit Glyceryldiethergruppen

$$—OCH_2—CHOH—CH_2—O—$$

oder Gruppen der Formel

$$—O—CH_2CH_2—SO_2—CH_2—CH_2—O—$$

vernetzt ist und in mit Wasser gequollenem Zustand mindestens 12 Gew.-% Trockensubstanz enthält, wobei mindestens 10% aus dem Galactan bestehen, und daß das Gel durch Auflösen selektiv abbaubarer Makromoleküle oder Teilchen gebildete Hohlräume oder Bereiche, die Proteine, Makromoleküle, Viren oder Subzelluläre Teilchen einschließen oder in die solche eindringen können, enthält.

2. Gelprodukt nach Anspruch 1, dadurch gekennzeichnet, daß es eine so hohe Permeabilität aufweist, daß ein ungeladenes wasserlösliches Polymerisat mit einem Molekulargewicht im Bereich von 10—20 Kilodalton zwischen dem Gel und der umgebenden Lösung in einer Weise verteilt wird, daß die Konzentration pro Volumeneinheit im Gel 110 der Konzentration im Rest der Lösung übersteigt.

3. Gelprodukt nach Ansprüchen 1 oder 2, dadurch gekennzeichnet, daß die zur Adsorption beitragenden Gruppen in wäßriger Lösung Ionen oder Ionogene des mit zweiwertigen und dreiwertigen Metallionen Chelate bildenden Typs sind.

4. Gelprodukt nach einem der vorhergehenden Ansprüche, dadurch gekennzeichnet, daß die zur Adsorption beitragenden Gruppen zur Affinitätschromatographie aus kovalent an die Gelmatrix gebundenen Liganden bestehen.

5. Gelprodukt nach Anspruch 4, dadurch gekennzeichnet, daß die kovalent gebundenen Liganden zur hydrophoben Adsorptionschromatographie aus Aminosäuren, Peptiden, Proteinen, Nukleotiden, Oligonukleotiden, Nukleinsäuren oder biologischen Teilchen, wie Zellen, Zellbruchstücken oder Viren, und/oder hydrophoben Gruppen, wie Alkyl- oder Arylgruppen, bestehen.

6. Verfahren zur Herstellung eines Gelprodukts nach Ansprüchen 1 bis 5, dadurch gekennzeichnet, daß galactan- und wasserhaltige Teilchen in Gelform oder als Tropfen in einer mit Wasser nicht mischbaren flüssigen Phase suspendiert und mit in alkalischer Umgebung abbaubaren Makromolekülen oder Mikroteilchen geringerer Abmessungen, als sie die Gelteilchen oder Flüssigkeitstropfen aufweisen, imprägniert werden, daß dann das Wasser volständig oder teilweise durch Methanol

oder Ethanol ersetzt wird, worauf bei vermindertem Druck eingedampft wird, so daß das Volumen des Gels auf die Hälfte oder weniger vermindert wird, daß das Gel in geschrumpften Zustand in einem Lösungsmittel, welches das Volumen des geschrumpften Gels um höchstens 50% erhöht, mit Glyceryldiethergruppen

$$-OCH_2-CHOH-CH_2-O-$$

oder Gruppen der Formel

$$-O-CH_2CH_2-SO_2-CH_2-CH_2-O-$$

vernetzt wird, worauf die imprägnierten Makromoleküle oder Mikropartikel in einem alkalischen Medium abgebaut werden und daß die zur Adsorption beitragenden Gruppen in das geschrumpfte Gel vor oder nach dem Herauslösen der imprägnierten Makromoleküle oder Mikropartikel eingeführt werden, oder daß das Wasser in den galactan- und wasserhaltigen Teilchen, die in Gelform oder als Tropfen in einer mit Wasser nicht mischbaren flüssigen Phase suspendiert sind, vollständig oder teilweise durch Methanol oder Ethanol ersetzt wird, worauf bei vermindertem Druck eingedampft wird, so daß das Volumen des Gels auf die Hälfte oder weniger vermindert wird, und daß anschließend das Gel in einem Lösungsmittel, welches das Volumen des geschrumpften Gels um höchstens 50% erhöht, vernetzt und die zur Adsorption beitragenden Gruppen in das geschrumpfte Gel vor oder nach dem Vernetzen eingeführt werden.

7. Verfahren nach Anspruch 6, dadurch gekennzeichnet, daß die zur Adsorption beitragenden Gruppen in das ursprüngliche Gel eingeführt werden.

8. Verfahren nach Ansprüchen 6 oder 7, dadurch gekennzeichnet, daß in das nicht-geschrumpfte Gel kieselsäurehaltige Mikropartikel eingeführt werden.

9. Verfahren nach Ansprüchen 6 oder 7, dadurch gekennzeichnet, daß das Imprägnieren durch Diffusion von Makromolekülen oder Teilchen in dem Gel in Form anschließend in Gelteilchen zu überführender galactanhaltiger Flüssigkeitstropfen erfolgt.

10. Verfahren nach Ansprüchen 6 bis 9, dadurch gekennzeichnet, daß die in Alkali abbaubaren Moleküle aus Protein oder Proteinaggregaten bestehen.

**Revendications**

1. Gel destiné essentiellement à des opérations de séparation, d'immobilisation de molécules et de particules, caractérisé en ce qu'il se compose de particules de forme sphérique contenant un galactane formant un gel, substitué par des groupes favorisant l'adsorption, ledit gel étant réticulé par des groupes diéther glycérylique

$$-OCH_2-CHOH-CH_2-O-$$

ou par des groupes répondant à la formule

$$-O-CH_2CH_2-SO_2-CH_2-CH_2-O-,$$

et, dans l'état gonflé, contenant au moins 12% en poids de substance sèche, dont au moins 10% étant le galactane, et en ce que le gel contient des cavités formées par dissolution de macromolécules ou particules sélectivement dégradables, ou des régions qui peuvent renfermer ou être pénétrées par des protéines, des macromolécules, des virus ou des particules subcellulaires.

2. Gel selon la revendication 1, caractérisé en ce qu'il a une perméabilité suffisante pour qu'un polymère soluble dans l'eau non chargé ayant une masse moléculaire dans la gamme de 10 à 20 kilodagton soit réparti entre le gel et la solution environnante de telle sorte que la concentration par unité de volume dans le gel dépasse un dixième de la concentration dans le reste de la solution.

3. Gel selon la revendication 1 ou 2, caractérisé en ce que les groupes favorisant l'adsorption sont des ions ou sont ionogènes en solution aqueuse, du type formant des chélates avec des ions métalliques divalents et trivalents.

4. Gel selon l'une quelconque des revendications précédentes, caractérisé en ce que les groupes favorisant l'adsorption sont des coordinats liés par covalence à la matrice du gel pour la chromatographie d'affinité.

5. Gel selon la revendication 4, caractérisé en ce que les coordinats liés par covalence sont des acides aminés, des peptides, des protéines, des nucléotides, des oligonucléotides, des acides nucléiques, ou des particules biologiques tels que des cellules, des fragments cellulaires ou des virus, et/ou des groupes hydrophobes tels que des groupes alkyle et aryle pour la chromatographie d'adsorption hydrophobe.

6. Procédé de préparation d'un gel selon les revendications 1 à 5, caractérisé en ce qu'on forme des particules contenant du galactane et de l'eau sous forme de gel ou sous de forme de gouttes en suspension dans une phase liquide non miscible à l'eau et en ce qu'on les imprègne de macromolécules ou de microparticules de dimensions plus faibles que les particules de gel ou les gouttes de liquide, et qui sont dégradables dans un environnement alcalin, après quoi on remplace complètement ou partiellement l'eau par du méthanol ou de l'éthanol, que l'on fait ensuite évaporer sous pression réduite, de telle sorte que le volume du gel soit réduit à la moitié ou moins, après quoi on réticule le gel avec des groupes diéther glycéryliques

$$-O-CH_2-CHOH-CH_2-O-$$

ou des groupes répondant à la formule

$$—O—CH_2—CH_2—SO_2—CH_2—CH_2—O—$$

à l'état rétracté dans un solvant qui augmente le volume du gel rétracté d'au plus 50%, après quoi on dégrade les macromolécules ou microparticules imprégnantes dans un milieu alcalin, les groupes favorisant l'adsorption étant introduits dans le gel rétracté avant ou après la dissolution des macromolécules ou microparticules d'imprégnation, ou en ce que l'eau présente dans les particules contenant du galactane et de l'eau sous forme de gel ou sous forme de gouttes en suspension dans une phase liquide non miscible à l'eau, est remplacée complètement ou partiellement par du méthanol ou de l'éthanol, que l'on fait ensuite évaporer sous pression réduite, de telle sorte que le volume du gel soit réduit à la moitié ou moins, après quoi on réticule le gel dans un solvant qui augmente le volume du gel rétracté d'au plus 50%, les groupes favorisant l'adsorption étant introduits dans le gel rétracté avant ou après la réticulation.

7. Procédé selon la revendication 6, caractérisé en ce que les groupes favorisant l'adsorption sont inclus dans le gel initial.

8. Procédé selon les revendications 6—7, caractérisé en ce que des microparticules contenant de l'acide silicique sont introduites dans le gel non rétracté.

9. Procédé selon la revendication 6 ou 7, caractérisé en ce que l'imprégnation est effectuée par diffusion de macromolécules ou de particules dans le gel, sous la forme de gouttes de liquide contenant du galactane, qui sont ensuite transférée en particules de gel.

10. Procédé selon les revendications 6—9 caractérisé en ce que les molécules dégradables dans en milieu alcalin consistent en protéines ou en aggrégats de protéines.